# EUROPÄISCHE PATENTANMELDUNG

(11) **EP 4 596 465 A1**
(43) Veröffentlichungstag der Anmeldung: **06.08.2025**
(21) Anmeldenummer: 24218783.9
(22) Anmeldetag: 10.12.2024
(51) Int. Cl.: B65G 47/252, A47L 15/24

(54) **BELADESYSTEM ZUM BELADEN EINER TRANSPORTSPÜLMASCHINE MIT SPÜLGUTTEILEN SOWIE ANORDNUNG ZUM ZUMINDEST TEILAUTOMATISIERTEN REINIGEN VON SPÜLGUTTEILEN MIT EINEM BELADESYSTEM**

(30) Priorität: 30.01.2024 DE 102024102560
(71) Anmelder: Illinois Tool Works Inc., Glenview IL 60025 (US)
(72) Erfinder: DISCH, Harald, Glenview, Illinois 60025 (US); SCHREMPP, Martin, Glenview, Illinois 60025 (US); BOLDT, Adrian, Glenview, Illinois 60025 (US); SCHEMEL, Jürgen, Glenview, Illinois 60025 (US); LITTERST, Norbert, Glenview, Illinois 60025 (US)
(74) Vertreter: Meissner Bolte Partnerschaft mbB

(57) **Zusammenfassung**

Die Erfindung betrifft ein Beladesystem (10) zum Beladen einer Transportspülmaschine (3) mit Spülgutteilen (100), wobei das Beladesystem (10) eine Transportbahn (11) aufweist, wobei ein in einem ersten Bereich (12) der Transportbahn (11) gestelltes Spülgutteil (100) zu einem oder in Richtung eines dem ersten Bereich (12) gegenüberliegenden zweiten Bereich (13) der Transportbahn (11) bewegbar ist. Die Transportbahn (11) weist eine Eintaktspur (14, 15) auf, welche in einen ersten Abschnitt (16) und in einen zweiten Abschnitt (17) unterteilt ist, wobei in einem Bereich zwischen dem ersten und zweiten Abschnitt (16, 17) eine Wendevorrichtung angeordnet ist, welche ausgebildet ist, ein von der Eintaktspur (14, 15) aufgenommenes und in dem Bereich zwischen dem ersten und zweiten Abschnitt (16, 17) der Eintaktspur (14, 15) bewegtes Spülgutteil (100) um 180° zu drehen und anschließend das um 180° gedrehte Spülgutteil (100) dem zweiten Abschnitt (17) der Eintaktspur (14, 15) zu übergeben, wobei unterhalb des Bereichs zwischen dem ersten und zweiten Abschnitt (16, 17) der Eintaktspur (14, 15) ein Schmutzsammelbereich (19) vorgesehen ist, von welchem Schmutz aufnehmbar ist, welcher beim Drehen des Spülgutteils (100) durch Schwerkraft von dem Spülgutteil (100) abfällt.

## Beschreibung

### Beschreibung

Die vorliegende Erfindung betrifft ein Beladesystem zum Beladen einer Transportspülmaschine mit Spülgutteilen. Insbesondere betrifft die Erfindung ein Beladesystem zum automatisierten oder zumindest teil-automatisierten Beladen von unterschiedlichen Transportspuren mindestens einer Transportspülmaschine. Die Erfindung betrifft ferner eine entsprechende Transportspülmaschine.

Transportspülmaschinen der erfindungsgemäßen Transportspülmaschinenanordnung sind insbesondere gewerbliche Transportspülmaschinen und können als Bandtransportspülmaschinen oder als Korbtransportspülmaschinen ausgebildet sein.

Transportspülmaschinen (conveyor warewasher) finden im gewerblichen Bereich Anwendung. Im Gegensatz zu Haushaltsspülmaschinen, in welchen das zu reinigende Spülgut während der Reinigung ortsfest in der Maschine verbleibt, findet bei Transportspülmaschinen ein Transport des Spülguts durch verschiedene Behandlungszonen der Maschine statt.

Bei Transportspülmaschinen wird das Spülgut (wash ware), wie beispielsweise Tabletts, Geschirr, Töpfe, Gläser, Besteck und andere zu reinigende Utensilien, durch mehrere Behandlungszonen, wie z. B. Vorwaschzone(n), Hauptwaschzone(n), Nachwasch- bzw. Vorspülzone(n), Klarspülzone(n) und Trocknungszone(n), gefördert. Für den Transport von Spülgut in einer Transportrichtung durch die Transportspülmaschine kommt eine Transportvorrichtung zum Einsatz, die in der Regel mindestens eine Transportspur mit Fächern zur Aufnahme von Spülgut aufweist. Bei einer Bandtransportspülmaschine können die Fächer durch Stützfinger auf einem die Transportspur definierenden Transportband der Transportvorrichtung gebildet sein. Bei Korbtransportspülmaschinen dienen als

Transportvorrichtung Geschirrkörbe, in denen zur Aufnahme des zu behandelnden Spülguts Fächer ausgebildet sein können. Denkbar hierbei ist es, dass die Geschirrkörbe mit einer Fördereinrichtung einer Transportspur durch die Korbtransportspülmaschine transportiert werden.

Üblicherweise wird das zu reinigende Spülgut vor dem Einstellen in das Transportband vorsortiert. Beispielsweise ist aus der Druckschrift US 6,530,996 B2 eine Korbtransportspülmaschine bekannt, bei welcher das zu behandelnde Spülgut vorsortiert in Geschirrkörben den jeweiligen Behandlungszonen zugeführt wird.

Transportspülmaschinen werden insbesondere in großen Einrichtungen, wie Mensen und Kantinen eingesetzt, um große Mengen an verschmutztem Spülgut möglichst wirtschaftlich zu reinigen. Mit Transportspülmaschinen der derzeit bekannten Art können mehrere hundert Gedecksätze pro Stunde gereinigt werden. Untersuchungen haben gezeigt, dass im Durchschnitt jeder Gedecksatz in der Regel aus einem Tablett, einem Teller, ein bis zwei Schälchen, einem Trinkglas sowie einem Bestecksatz besteht.

In fast sämtlichen Großküchen, wie beispielsweise Betriebskantinen oder Mensen, wird das von den Essensteilnehmern genutzte Spülgut (Geschirr, Trinkgläser, Besteck, etc.) auf Tabletts zurückgegeben. Von der Rückgabestation werden die Gedecksätze in die Spülküche transportiert. Üblicherweise erfolgt der Transport der Gedecksätze mit einem entsprechenden Zufuhrförderband. Dabei wird der Gedecksatz mit einem Förderband von der Rückgabestation in die Spülküche direkt zu einem Beladebereich der Transportspülmaschine befördert.

Im Belade- bzw. Zulaufbereich der Transportspülmaschine werden dann üblicherweise die Spülgutteile manuell vom Bedienpersonal abgenommen und in das Transportband der Transportspülmaschine einsortiert.

Im Hinblick auf Tabletts oder tablettartige Gegenstände geschieht die Vorsortierung üblicherweise derart, dass der Geschirr- und Bestecksatz von dem Bedienpersonal manuell von einem zu reinigenden Tablett abgenommen wird und das Tablett anschließend vor der Transportvorrichtung bzw. im Zulaufbereich (Schmutzseite) der Transportspülmaschine gestapelt wird. Die Tabletts aus diesem Tablettstapel werden von Zeit zu Zeit sortenrein in das Transportband der Transportspülmaschine eingestellt und gereinigt.

Dieses sortenreine Vorgehen hat den Vorteil, dass Tabletts keinen Sprühschatten auf kleinere, hinter den Tabletts eingestapelten Spülgutteile werfen können. Weiterhin ist durch dieses Vorgehen der Arbeitsablauf des Ein- und Abstapelns stark vereinfacht und effizienter im Vergleich zu einer durch Mischung des Spülguts mit den zu reinigenden Tabletts.

Während die Tabletts aus diesem Tablettstapel sortenrein in das Transportband der Transportspülmaschine eingestellt und gereinigt werden, ist es allerdings nicht möglich, anderes Spülgut zu reinigen, wie beispielsweise Teller, Schälchen oder anderes Geschirr, da die in das Transportband einzustellenden Tabletts üblicherweise quer zur Transportrichtung in das Transportband eingestellt werden müssen und so die gesamte zur Verfügung stehende Fläche des Transportbandes ausfüllen. Im Vergleich zu anderen Spülgutarten muss von daher für die Reinigung von Tabletts relativ viel Zeit aufgewendet werden.

Weiterhin muss das Bedienpersonal der Transportspülmaschine am Maschineneinlass jedes Tablett zwei Mal in seinen Arbeitsablauf einbinden: das erste Mal beim Abnehmen der Besteck- und Geschirrteile von dem zu reinigenden Tablett, und das zweite Mal beim eigentlichen Einstellen der Tabletts in das Transportband der Transportspülmaschine.

Bei dem beschriebenen Arbeitsprozess ist der manuelle Aufwand besonders hoch. Jedes Spülgutteil (Geschirrteil) eines jeden Gedecksatzes muss einzeln manuell vom Tablett abgenommen und in das Transportband der Spülmaschine eingestellt werden.

Ferner, müssen die einzelnen Besteckteile je Gedecksatz manuell von dem Tablett entnommen und ebenfalls der Transportspülmaschine zugeführt werden. Anschließend erfolgt die zuvor beschriebene Behandlung der eigentlichen Tabletts.

Bei einer Maschinenkapazität von mehreren tausend Tellern pro Stunde muss insbesondere möglichst schnell und effizient gearbeitet werden, wodurch die körperliche Belastung des Bedienpersonals steigt.

Auf Grundlage dieser Problemstellung liegt der vorliegenden Erfindung die Aufgabe zu Grunde, eine Lösung für Transportspülmaschinen der eingangs genannten Art anzugeben, bei welcher es möglich ist, den gesamten Wasch- und Spülprozess effizienter zu gestalten, wodurch insbesondere die Arbeitszeit des Spülpersonals gekürzt und der Ressourcenverbrauch der Spülmaschinenanordnung reduziert werden kann.

Diese Aufgabe wird erfindungsgemäß durch den Gegenstand des unabhängigen Patentanspruches 1 gelöst, wobei vorteilhafte Weiterbildungen hiervon in den entsprechenden abhängigen Patentansprüchen angegeben sind.

Demnach betrifft die Erfindung insbesondere ein Beladesystem zum Beladen einer Transportspülmaschine mit Spülgutteilen. Das Beladesystem weist eine insbesondere als Rutsche ausgeführte Transportbahn auf, um Spülgutteile, die beispielsweise über ein Zuführförderband zugeführt werden, über die Transportbahn der Transportspülmaschine und insbesondere einer Transportspur der Transportspülmaschine zuzuführen.

Hierzu ist die Transportbahn insbesondere als Rutsche ausgeführt, wobei allerdings auch andere Ausführungen für die Transportbahn in Frage kommen. Die Transportbahn ist vorzugsweise gegenüber der Horizontalen derart geneigt oder neigbar, dass ein in einem insbesondere oberen ersten Bereich der Transportbahn beispielsweise manuell gestelltes Spülgutteil vorzugsweise ausschließlich durch Schwerkraft zu einem oder in Richtung eines dem ersten Bereich gegenüberliegenden insbesondere unteren zweiten Bereich der Transportbahn bewegbar ist.

Dabei kann das Spülgutteil manuell in den ersten Bereich der Transportbahn gestellt werden, wobei allerdings auch hier eine automatisierte Lösung mit Hilfe eines Roboters denkbar ist.

Im Hinblick auf die Transportbahn des erfindungsgemäßen Beladesystems ist vorgesehen, dass diese mindestens eine sich in der Längserstreckungsrichtung der Transportbahn erstreckende Eintaktspur aufweist, wobei die mindestens eine Eintaktspur in einen insbesondere oberen, ersten Abschnitt und in einen insbesondere unteren zweiten Abschnitt unterteilt ist. Der erste Abschnitt der Eintaktspur ist insbesondere Teil des ersten Bereichs der Transportbahn, während der zweite Abschnitt der Eintaktspur insbesondere Teil des zweiten Bereichs der Transportbahn ist.

In einem Bereich zwischen dem ersten und zweiten Abschnitt der Eintaktspur ist eine den ersten Abschnitt der Eintaktspur mit dem zweiten Abschnitt der Eintaktspur verbindende Wendevorrichtung angeordnet, welche ausgebildet ist, ein von der Eintaktspur aufgenommenes und in dem Bereich zwischen dem ersten und zweiten Abschnitt der Eintaktspur bewegtes Spülgutteil um 180° zu drehen und anschließend das um 180° gedrehte Spülgutteil dem zweiten Abschnitt der Eintaktspur zu übergeben, so dass dann das um 180° gedrehte Spülgutteil weiter zu dem zweiten Bereich der Transportbahn bewegt werden kann.

Erfindungsgemäß ist insbesondere vorgesehen, dass unterhalb des Bereichs zwischen dem ersten und dem zweiten Abschnitt der Eintaktspur, d.h. in dem Bereich, in welchem auch die Wendevorrichtung angeordnet ist, ein Schmutzsammelbereich vorgesehen ist, von welchem Schmutz aufnehmbar ist, welcher beim Drehen des Spülgutteils durch Schwerkraft von dem Spülgutteil abfällt.

Mit dieser Lösung ist eine Reihe von Vorteilen erzielbar.

Insbesondere handelt es sich bei dem erfindungsgemäßen Beladesystem um ein Beladesystem, mit welchem manuelle Handhabungsschritte zum Beladen der Transportvorrichtung einer Transportspülmaschine weiter reduziert werden, da Spülgutteile, wie beispielsweise Teller und Schälchen, zumindest halb-automatisch in das Haupttransportband der Transportspülmaschine einsortiert werden können. Auf diese Weise werden die manuellen Arbeitsschritte reduziert und somit der Arbeitsaufwand für den Bediener, da der Bewegungsablauf zum Beladen von Spülgutteilen, insbesondere von Tellern und Schälchen, für den Bediener dadurch insbesondere optimiert wird, dass keine 180°-Drehung beispielsweise der Schälchen zwischen der Entnahme der Schälchen von beispielsweise einem Tablett und dem Beladen der Schälchen in die Transportbahn des Beladesystems notwendig ist. Die Drehung des Schälchens erfolgt innerhalb des Beladesystems, und zwar durch die Wendevorrichtung.

Darüber hinaus ist keine Einsortierung der Spülgutteile in dedizierte Transportbandfächer insbesondere des Haupttransportbands der Transportspülmaschine notwendig, da mit dem erfindungsgemäßen Beladesystem eine Eintaktung der Spülgutteile in das Transportband durch das Beladesystem selber erfolgt.

Insbesondere lässt sich somit das Reinigungsergebnis der Transportspülmaschine verbessern, da in einer leicht zu realisierenden aber dennoch effektiven und insbesondere zumindest teil-automatisierten Weise sichergestellt ist, dass sämtliches Spülgut einheitlich auf dem Transportband der Transportspülmaschine orientiert ist und vorzugsweise sortenrein innerhalb der dedizierten Spuren des Haupttransportbands der Transportspülmaschine fährt.

Im weiteren Verlauf ist dadurch auch der Entladeprozess der Transportspülmaschine bzw. des Transportbands der Transportspülmaschine vereinfacht, da jede Spülgutsorte auf einer definierten Transportspur durch die Spülmaschine transportiert wird und somit bereits vorsortiert am Entladebereich der Transportspülmaschine ankommt.

Insbesondere unterscheidet sich das Beladesystem signifikant von einem Beladesystem, bei welchem zum Überführen der zu reinigenden Spülgutteile und zum Eintakten dieser in das Haupttransportband der Spülmaschine ein Wenderad zum Einsatz kommt, wie es beispielsweise aus der Druckschrift KR 100977943 B1 oder aus der Druckschrift KR 101487193 B1 bekannt ist. Derartige aus beispielsweise diesem Stand der Technik bekannten Wenderäder weisen eine gewisse Stirnverzahnung oder entsprechende Stützfinger auf, wobei zwischen zwei Stützfingern bzw. in einer Stirnverzahnung des Wenderads ein randseitiger Peripheriebereich des zu behandelnden Spülgutteils eingefahren und dann durch Drehung des Wenderads über einen gewissen Winkelgrad gedreht wird.

Der Nachteil solcher allgemein aus dem technischen Spülen bekannten Wenderäder ist insbesondere darin zu sehen, dass bei einer Drehung des (schmutzigen) Spülgutteils mit Hilfe eines solchen Wenderads ggf. in dem Spülgutteil noch vorhandene Speisereste oder anderer Schmutz durch Schwerkraft herabfällt und die Mechanik bzw. das Wenderad oder gar den zweiten Abschnitt der Eintaktspur verschmutzt.

Insbesondere fällt bei einer Wendevorrichtung, die als Wenderad ausgeführt ist, der Schmutz, d.h. auf oder in dem Spülgutteil aufgenommene Abfälle, aufgrund ihrer Schwerkraft nicht in den Bereich zwischen den ersten und zweiten Abschnitt der Eintaktspur, sondern tatsächlich in den Bereich des zweiten Abschnitts der Eintaktspur. Dies wiederum sorgt dafür, dass ein Abschnitt der Eintaktspur, d.h. dort, wo das Spülgutteil aufzusetzen ist, mit Schmutz belastet wird, was zur Folge hat, dass die Gefahr besteht, dass dieser Schmutz entlang der Eintaktspur auch dem Haupttransportband der Transportspülmaschine zugeführt wird.

Abgesehen hiervon benötigen Wenderäder grundsätzlich einen relativ großen Bauraum.

Diese Probleme sind mit der Erfindung insbesondere dadurch gelöst, dass die Wendevorrichtung ein Wendefach, insbesondere in Gestalt einer einseitig offenen und zumindest im Wesentlichen kastenförmigen Lade, aufweist, an Stelle eines Wenderads.

Dadurch, dass die Wendevorrichtung als Wendefach ausgeführt ist, ist sichergestellt, dass bei der 180°-Drehung des Spülgutteils der Schmutz, also die auf dem Spülgutteil aufgenommenen Abfälle, aufgrund ihrer Schwerkraft in den Bereich zwischen den ersten und zweiten Abschnitt der Eintaktspur fallen (und insbesondere nicht in den Bereich des zweiten Abschnitts der Eintaktspur), so dass eine Separierung zu dem zweiten Abschnitt der Eintaktspur erfolgt und somit sichergestellt ist, dass der beim Drehen des Spülgutteils von dem Spülgutteil herabfallende Schmutz über den zweiten Abschnitt der Eintaktspur dem Haupttransportband der Transportspülmaschine zugeführt wird.

Insbesondere ist somit deshalb erfindungsgemäß vorgesehen, dass unterhalb des Bereichs zwischen dem ersten und dem zweiten Abschnitt der Eintaktspur des erfindungsgemäßen Beladesystems der bereits genannte Schmutzsammelbereich vorgesehen ist, von welchem Schmutz aufnehmbar ist, welcher beim Drehen des Spülgutteils durch Schwerkraft von dem Spülgutteil abfällt.

Vorteilhafte Weiterbildungen des erfindungsgemäßen Beladesystems sind in den abhängigen Ansprüchen genannt.

So ist gemäß einer bevorzugten Realisierung des erfindungsgemäßen Beladesystems vorgesehen, dass die Wendevorrichtung ein Wendefach, insbesondere in Gestalt einer einseitig offenen und zumindest im Wesentlichen kastenförmigen Lade, aufweist. Dabei ist das Wendefach zwischen einer ersten Stellung, in welcher das von der Eintaktspur aufgenommene und in dem Bereich zwischen dem ersten und zweiten Abschnitt der Eintaktspur bewegte Spülgutteil zumindest teil- oder bereichsweise von dem Wendefach aufgenommen ist, und einer zweiten Stellung überführbar ist, in welcher das Wendefach mit dem von dem Wendefach zumindest teil- oder bereichsweise aufgenommenen Spülgutteil - im Vergleich zu der ersten Stellung des Wendefachs - um 180° gedreht vorliegt.

Selbstverständlich ist es in diesem Zusammenhang nicht zwingend erforderlich, dass das Wendefach geschlossene Wandflächen aufweist. Auch sind entsprechende Gitter oder Stabstrukturen denkbar.

Gemäß Weiterbildungen der Erfindung ist vorgesehen, dass das insbesondere in Gestalt einer einseitig offenen und zumindest im Wesentlichen kastenförmigen Lade ausgeführte Wendefach um eine zumindest im Wesentlichen horizontalverlaufende Achse verschwenkbar zwischen der ersten und zweiten Stellung relativ zu dem ersten und zweiten Abschnitt der Eintaktspur gelagert ist.

Gemäß Ausführungsformen des erfindungsgemäßen Beladesystems ist vorgesehen, dass das insbesondere in Gestalt einer einseitig offenen und zumindest im Wesentlichen kastenförmigen Lade ausgeführte Wendefach einen - in der ersten Stellung des Wendefachs - unteren Bodenbereich und einen - in der ersten Stellung des Wendefachs - dem zweiten Abschnitt der Eintaktspur zugewandten stirnseitigen Wandbereich aufweist, wobei vorzugsweise das Spülgut gegen den stirnseitigen Wandbereich des Wendefachs anstößt, wenn in der ersten Stellung des Wendefachs das Spülgutteil zumindest teil- oder bereichsweise aufgenommen wird oder aufgenommen ist.

Dabei ist es nicht zwingend erforderlich, dass es sich bei dem dem zweiten Abschnitt der Eintaktspur zugewandten stirnseitigen Wandbereich des Wendefachs um einen durchgehend geschlossenen Wandbereich handelt. Auch ist es beispielsweise denkbar, dass der Wandbereich durch lediglich eine Strebe, Leiste oder Zeile gebildet wird.

Insbesondere ist das Wendefach derart um die zumindest im Wesentlichen horizontalverlaufende Achse verschwenkbar gelagert, dass der stirnseitige Wandbereich des Wendefachs in der zweiten Stellung des Wendefachs dem ersten Abschnitt der Eintaktspur zugewandt ist.

In der ersten Stellung des Wendefachs liegen die Oberfläche des Bodenbereichs des Wendefachs, die Oberfläche des ersten Abschnitts der Eintaktspur und die Oberfläche des zweiten Abschnitts der Eintaktspur vorzugsweise in einer gemeinsamen Ebene, so dass das zu wendende Spülgutteil von dem ersten Abschnitt der Eintaktspur in das Wendefach problemlos gleiten kann.

Gemäß Realisierungen des erfindungsgemäßen Beladesystems ist vorgesehen, dass das insbesondere in Gestalt einer einseitig offenen und zumindest im Wesentlichen kastenförmigen Lade ausgeführte Wendefach mindestens eine Abstützung aufweist, welche ausgebildet ist, zu verhindern, dass beim Überführen des Wendefachs von der ersten Stellung in die zweite Stellung das zumindest teil- oder bereichsweise von dem Wendefach aufgenommene Spülgutteil aus dem Wendefach herausfällt.

Auf diese Weise kann mit dem Beladesystem auch sehr sensitives Spülgut, wie beispielsweise feines Porzellan, bearbeitet werden, ohne dass die Gefahr besteht, dass das Spülgutteil insbesondere in der Wendevorrichtung beschädigt wird.

Auch dies liefert einen signifikanten Vorteil gegenüber einer als Wenderad ausgeführten Wendevorrichtung, bei welcher beim Erreichen eines bestimmten Drehwinkels das von dem Wenderad zuvor aufgenommene Spülgutteil aus dem Wenderad herausfällt, was unter Umständen zu einer Beschädigung des Spülgutteils führen kann.

Zur Realisierung der zuvor genannten Abstützung kommen unterschiedliche Ausführungsformen in Frage. So ist es beispielsweise denkbar, dass die mindestens eine Abstützung einen bedarfsweise insbesondere seitlich in das Wendefach einfahrbaren Abstützkörper aufweist.

Andererseits ist es aber auch denkbar, dass die Abstützung durch eine Führung versehen ist, die ausgebildet ist, zu verhindern, dass beim Überführen des Wendefachs von der ersten Stellung in die zweite Stellung das zumindest teil- oder bereichsweise von dem Wendefach aufgenommene Spülgutteil aus dem Wendefach herausfällt.

Denkbar in diesem Zusammenhang ist es insbesondere, dass das insbesondere in Gestalt einer einseitig offenen und zumindest im Wesentlichen kastenförmigen Lade ausgeführte Wendefach mindestens eine insbesondere als Hinterschneidung ausgeführte, sich in der Längserstreckungsrichtung der Transportbahn erstreckende und parallel zu dem Bodenbereich des Wendefachs verlaufende Führung, insbesondere in Gestalt einer Führungsleiste oder Führungsschiene, aufweist, wobei in der zweiten Stellung des Wendefachs die Oberfläche der Führung, die Oberfläche des ersten Abschnitts der Eintaktspur und die Oberfläche des zweiten Abschnitts der Eintaktspur in einer gemeinsamen Ebene liegen.

Dies hat den signifikanten Vorteil, dass, nachdem das Wendefach mit dem darin aufgenommenen Spülgutteil um 180° gedreht wurde, das so gedrehte Spülgutteil aus dem ebenfalls gedrehten Wendefach hindernislos in den zweiten Abschnitt der Eintaktspur überführt werden kann.

Gemäß Realisierungen des erfindungsgemäßen Beladesystems ist insbesondere vorgesehen, dass die Wendevorrichtung des Beladesystems einen insbesondere elektrisch, elektromagnetisch, pneumatisch oder hydraulisch arbeitenden Aktuator aufweist, welcher ausgebildet ist, bedarfsweise das Wendefach von der ersten Stellung in die zweite Stellung (und umgekehrt) zu überführen.

Insbesondere in diesem Zusammenhang bietet es sich an, dass die Wendevorrichtung eine Sensorik, insbesondere in Gestalt eines Präsenzmelders oder Anwesenheitsschalters, aufweist, welche ausgebildet ist, einen Zustand zu erfassen, wenn ein Spülgutteil zumindest teil- oder bereichsweise von dem Wendefach aufgenommen ist. Die Sensorik kann auch eine berührungslos arbeitende, optische Sensorik, beispielsweise eine Lichtschranke oder einen Lichtvorhang aufweisen. Dabei ist dem Aktuator der Wendevorrichtung eine Steuereinrichtung zugeordnet bzw. dabei weist der Aktuator der Wendevorrichtung eine entsprechende Steuervorrichtung auf, welche ausgebildet ist, beim sensorischen Erfassen, dass ein Spülgutteil zumindest teil- oder bereichsweise von dem Wendefach aufgenommen ist, den Aktuator derart anzusteuern, dass der Aktuator das Wendefach von der ersten Stellung in die zweite Stellung überführt.

In diesem Zusammenhang bietet es sich ebenfalls an, dass das Wendefach derart um eine zumindest im Wesentlichen horizontalverlaufende und sich vorzugsweise senkrecht zur Längserstreckungsrichtung der Transportbahn erstreckende Achse verschwenkbar gelagert ist, dass sich das Wendefach selbstständig oder selbsttätig von der ersten Stellung in Richtung der zweiten Stellung bewegt, wenn - in der ersten Stellung des Wendefachs - ein Spülgutteil zumindest teil- oder bereichsweise von dem Wendefach aufgenommen ist oder aufgenommen wird.

In diesem Zusammenhang kann die Sensorik ausgebildet sein, zu erfassen, dass sich das Wendefach von der ersten Stellung in Richtung der zweiten Stellung bewegt, insbesondere wenn - in der ersten Stellung des Wendefachs - ein Spülgutteil zumindest teil- oder bereichsweise von dem Wendefach aufgenommen ist oder aufgenommen wird.

Der beim Drehen des Spülgutteils durch Schwerkraft von dem Spülgutteil abfallende Schmutz ist insbesondere über eine von einem Randbereich des Schmutzsammelbereichs definierte Öffnung dem Schmutzsammelbereich zuführbar. Dabei ist der die Öffnung des Schmutzsammelbereichs definierende Randbereich des Schmutzsammelbereichs in einer Ebene angeordnet, die parallel von und vorzugsweise parallel zu der Ebene verläuft, in welcher in der ersten Stellung des Wendefachs die Oberfläche des Bodenbereichs des Wendefachs liegt.

Mit dieser Ausführungsvariante ist eine möglichst gekapselte Ausgestaltung des Schmutzsammelbereichs möglich, so dass wirksam verhindert wird, dass der während der Drehung des Spülgutteils von dem Spülgutteil herabfallende Schmutz in den Bereich des zweiten Abschnitts der Eintaktspur gelangt. Eine Überführung des von dem Spülgutteil während des Wendevorgangs herabfallenden Schmutzes über den zweiten Abschnitt der Eintaktspur zu der Transportvorrichtung der Transportspülmaschine ist somit besonders wirksam verhindert.

Die Wendevorrichtung ist vorzugsweise bedarfsweise aktivierbar, wobei in einem nicht-aktivierten Zustand der Wendevorrichtung das von der Eintaktspur aufgenommene und in dem Bereich zwischen den ersten und zweiten Abschnitt der Eintaktspur bewegte Spülgutteil ohne eine 180°-Drehung des Spülgutteils dem zweiten Abschnitt der Eintaktspur übergeben wird.

Um dies zu ermöglichen, ist es denkbar, dass der stirnseitige Wandbereich des insbesondere in Gestalt einer einseitig offenen und zumindest im Wesentlichen kastenförmigen Lade ausgeführten Wendefachs aus dem durch die Eintaktspur vorgegebenen Bewegungsweg des Spülgutteils bedarfsweise heraus- bzw. hereinfahrbar ist.

Wie bereits eingangs ausgeführt, kann die Transportbahn als Transportrutsche ausgeführt sein, so dass das im ersten Bereich der Eintaktspur gesetzte Spülgutteil vorzugsweise rein durch Schwerkraft dem zweiten Abschnitt der Eintaktspur zuführbar ist. Alternativ hierzu ist es aber auch denkbar, dass die Transportbahn zumindest teil- oder bereichsweise als Rollenbahn mit einer Vielzahl von sich senkrecht zu der Längserstreckungsrichtung der Transportbahn erstreckenden und insbesondere drehbar gelagerten Rollen ausgeführt ist.

Alternativ oder zusätzlich hierzu kann die Transportbahn eine Fördereinrichtung aufweisen, mit welcher das in den ersten Bereich der Transportbahn gestellte Spülgutteil bzw. das in den ersten Abschnitt der Eintaktspur der Transportbahn gestellte Spülgutteil zu dem oder in Richtung des zweiten Bereichs der Transportbahn bzw. zu dem oder in Richtung des zweiten Abschnitts der Eintaktspur bewegbar ist.

Vorzugsweise ist die Transportbahn des Beladesystems in mehrere parallel zueinander verlaufende Eintaktspuren aufgeteilt, wobei nicht jede Eintaktspur mit einer Wendevorrichtung versehen sein muss. Insbesondere sind nur die Eintaktspuren mit einer entsprechenden Wendevorrichtung versehen, für welche die zugeordneten Spülgutteilarten bei der Beladung in das Haupttransportband der Transportspülmaschine eine 180°-Drehung erfordern.

Der mindestens einen Eintaktspur der Transportbahn und insbesondere jeder Eintaktspur der Transportbahn ist Spülgut einer bestimmten Größe und/oder Abmessung oder Spülgut einer bestimmten Art zugeordnet.

Vorzugsweise ist der mindestens einen Eintaktspur mindestens eine Abdeckung zugeordnet ist, welche ausgebildet ist, zumindest teil- oder bereichsweise von oben die zugeordnete Eintaktspur abzudecken, so dass die Eintaktspur mit der Abdeckung einen schachtartigen Kanal zum Aufnehmen von entsprechenden Spülgutteilen ausbildet, wobei die Abdeckung vorzugsweise von der zugeordneten Eintaktspur entfernbar ausgeführt ist.

Um einen besonders störungsfreien Betrieb des Beladesystems zu gewährleisten, weist das Beladesystem eine Einrichtung zur Taktung der Bewegung der in einer Eintaktspur aufgenommenen Spülgutteile von dem ersten Bereich der Transportbahn zu dem zweiten Bereich der Transportbahn bzw. von dem ersten Abschnitt der Eintaktspur zu dem zweiten Abschnitt der Eintaktspur auf. Dabei ist die Eintaktspur in mehrere Intervalle aufgeteilt, wobei die Taktungseinrichtung ausgebildet ist, einen Transfer eines Spülgutteils von einem ersten Intervall zu einem benachbarten zweiten Intervall entsprechend zu steuern.

Zur Realisierung einer solchen Taktungseinrichtung ist es denkbar, dass zur Aufteilung der Eintaktspur in die Intervalle die Taktungseinrichtung entsprechende jeweils das Ende eines jeden Intervalls der Eintaktspur festlegende Sperrelemente aufweist, welche in die Eintaktspur ein- und ausfahrbar sind zum Sperren bzw. Freigeben des Transfers des Spülgutteils von dem ersten Intervall der Eintaktspur zu dem benachbarten zweiten Intervall der Eintaktspur.

Die Taktungseinrichtung ist dabei insbesondere ausgebildet, die jeweiligen den Intervallen der Eintaktspur zugeordneten Sperrelemente derart anzusteuern, dass die Sperrelemente zeitgleich in die Eintaktspur ein- oder ausgefahren werden, so dass der Transfer des Spülgutteils von dem ersten Intervall zu dem benachbarten zweiten Intervall der Eintaktspur nur dann freigegeben wird, wenn sich kein Spülgutteil mehr in dem zweiten Intervall befindet oder wenn sich ein Spülgutteil von dem zweiten Intervall in ein zum zweiten Intervall benachbartes drittes Intervall bzw. in Richtung des Haupttransportbands der Transportspülmaschine bewegt.

Die zeitliche Steuerung der Sperrelemente erfolgt vorzugsweise in Synchronisation mit der Transportgeschwindigkeit des Haupttransportbands der Transportspülmaschine. Insbesondere kann auf diese Weise auf eine Sensorik verzichtet werden, welche ausgebildet ist, entsprechende Fächer zum Aufnehmen der einzutaktenden Spülgutteile zu erfassen.

Im Hinblick auf den Schmutzsammelbereich des Beladesystems ist in vorteilhafter Weise vorgesehen, dass der Schmutzsammelbereich über einen Schmutzabfallschacht mit einem bei einem Zulauf- oder Beladebereich einer dem Beladesystem zugeordneten Transportspülmaschine vorgesehenen Schmutzsammelbereich verbunden ist, wobei der Schmutzabfallschacht vorzugsweise derart ausgebildet ist, dass der in dem Schmutzsammelbereich des Beladesystems gesammelte Schmutz durch Schwerkraft über den Schmutzabfallschacht in den Schmutzsammelbereich bei dem Zulauf- oder Beladebereich der Transportspülmaschine gelangt oder gelangen kann.

Insbesondere kann der Schmutzabfallschacht als Schmutzabfallkanal oder als Schmutzabfallrutsche ausgeführt sein.

Von Vorteil ist es weiterhin, dass der Schmutzsammelbereich über den Schmutzabfallschacht mit einer bestehenden Siebschublade (incl. Schmutzsammelbereich) des abgesenkten Zulaufs der Transportspülmaschine verbunden ist. Dadurch wird ein größeres Volumen zur Aufnahme des bei der 180° Drehung abfallenden Schmutzes bereitgestellt. Die Siebschublade kann entweder bei Bedarf manuell geleert werden oder an eine automatische Nassmüllentsorgungsanlage angeschlossen werden. Damit ist ein möglichst langer unterbrechungsfreier Betrieb möglich, ohne den Schmutzsammelbereich leeren zu müssen.

Die Erfindung betrifft ferner eine Anordnung zum zumindest teil-automatisierten Reinigen von Spülgutteilen, wobei die Anordnung ein Zuführsystem, insbesondere in Gestalt eines Zuführförderbands, aufweist zum Zuführen der zu reinigenden Spülgutteile. Darüber hinaus umfasst die Anordnung eine Transportspülmaschine mit mindestens einer Transportvorrichtung (Haupttransportband) insbesondere in Gestalt eines Transportbands zum Zuführen der zu reinigenden Spülgutteile zu mindestens einer Behandlungszone der Transportspülmaschine.

Um die zu reinigenden Spülgutteile von dem Zuführsystem zu der Transportvorrichtung der Transportspülmaschine zu transferieren, kommt bei der erfindungsgemäßen Anordnung ein Beladesystem der zuvor genannten erfindungsgemäßen Art zum Einsatz.

Bei Realisierungen der erfindungsgemäßen Anordnung ist insbesondere vorgesehen, dass zumindest in dem Bereich zwischen dem Zuführsystem und dem Beladesystem von dem Zuführsystem die zu reinigenden Spülgutteile im Wesentlichen senkrecht zu der Erstreckungsrichtung der Transportbahn des Beladesystems zugeführt werden, und wobei die Erstreckungsrichtung der Transportbahn des Beladesystems zumindest in einem Beladebereich der Transportspülmaschine mit der Erstreckungsrichtung der Transportvorrichtung der Transportspülmaschine zumindest im Wesentlichen übereinstimmt.

Nachfolgend wird die Erfindung unter Bezugnahme auf die beiliegenden Zeichnungen näher beschrieben.

Es zeigen:
- FIG. 1: schematisch und in einer isometrischen Ansicht eine exemplarische Ausführungsform der erfindungsgemäßen Anordnung zum zumindest teil-automatisierten Reinigen von Spülgutteilen, wobei in FIG. 1 das Zuführsystem, das Beladesystem und der Beladebereich einer Transportspülmaschine der Anordnung gezeigt sind;
- FIG. 2: schematisch und in einer Seitenansicht die exemplarische Ausführungsform der erfindungsgemäßen Anordnung gemäß FIG. 1;
- FIG. 3: schematisch und in einer Draufsicht die exemplarische Ausführungsform der erfindungsgemäßen Anordnung gemäß FIG. 1;
- FIG. 4: schematisch und in einer isometrischen Ansicht eine Ausführungsform des bei der Anordnung gemäß FIG. 1 zum Einsatz kommenden Beladesystems, und zwar mit entsprechenden Abdeckungen der Eintaktspuren des Beladesystems;
- FIG. 5: schematisch und in einer Draufsicht das Beladesystem gemäß FIG. 4;
- FIG. 6: schematisch und in einer isometrischen Ansicht das Beladesystem gemäß FIG. 4, jedoch ohne die Abdeckungen der Eintaktspuren;
- FIG. 7: schematisch und in einer Draufsicht das Beladesystem gemäß FIG. 6;
- FIG. 8A: schematisch und in einer teilgeschnittenen Seitenansicht das Beladesystem gemäß FIG. 4;
- FIG. 8B: schematisch und in einer teilgeschnittenen Seitenansicht das Beladesystem gemäß FIG. 8A, wobei sich allerdings die Wendevorrichtung des Beladesystems ausgehend von ihrer in FIG. 8A gezeigten ersten Stellung in einer Zwischenstellung zwischen der ersten Stellung und der in FIG. 8C gezeigten und um 180° gedrehten zweiten Stellung befindet; und
- FIG. 8C: schematisch und in einer teilgeschnittenen Seitenansicht das Beladesystem gemäß FIG. 8B, wobei sich jedoch die Wendevorrichtung nun in der um - im Vergleich zu der ersten Stellung gemäß FIG. 3A - 180° gedrehten zweiten Stellung befindet.

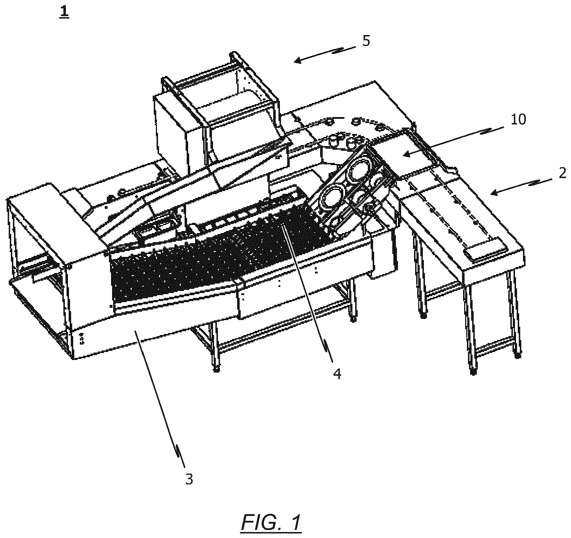

Die in FIG. 1 schematisch und in einer isometrischen Ansicht gezeigte Anordnung 1 zum zumindest teil-automatisierten Reinigen von Spülgutteilen 100 weist ein Zuführsystem 2 in Gestalt eines Zuführförderbands auf, über welches die zu reinigenden Spülgutteile 100 einem Beladesystem 10 zugeführt werden.

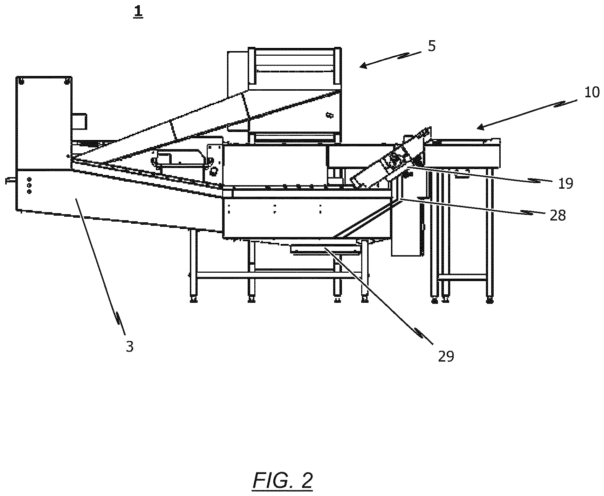

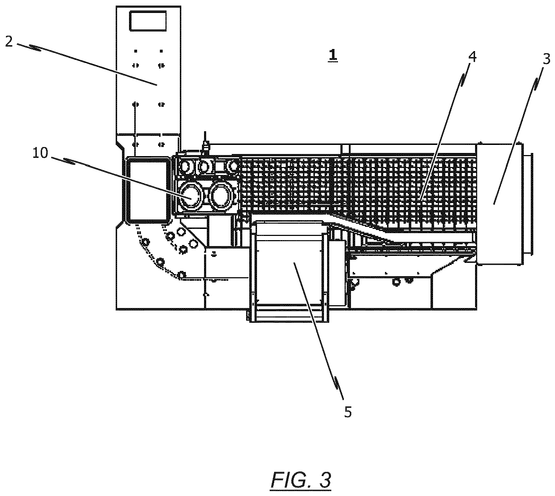

FIG. 2 zeigt schematisch und in einer Seitenansicht die exemplarische Ausführungsform der erfindungsgemäßen Anordnung gemäß FIG. 1, und FIG. 3 zeigt schematisch und in einer Draufsicht die exemplarische Ausführungsform der erfindungsgemäßen Anordnung gemäß FIG. 1.

Insbesondere ist es denkbar, dass über das Zuführsystem 2 bzw. über das Zuführförderband Gedecksätze bestehend aus einem Tablett und entsprechenden auf dem Tablett aufgenommenen und zu reinigenden Spülgutteilen 100 einem ersten, insbesondere oberen Bereich 12 des Beladesystems 10 zugeführt werden.

Die Gedecksätze mit den zu reinigenden Spülgutteilen 100 können direkt durch den Essensteilnehmer oder durch das Spülpersonal auf das Zuführförderband abgestellt sein. Das Zuführförderband bzw. Zuführsystem 2 fördert dann die Gedecksätze zum Zulauf- bzw. Beladebereich der Transportspülmaschine 3. Dort werden die Besteck- und Geschirrteile beispielsweise manuell von den Tabletts abgenommen und die manuell abgenommenen Geschirrteile werden dann manuell in entsprechende Eintaktspuren 14, 15 des Beladesystems 10 einsortiert.

Bei der in FIG. 1 gezeigten Ausführungsform der erfindungsgemäßen Anordnung 1 werden dann die leergeräumten Tabletts über das Zuführsystem 2 einer automatischen Tablett-Eintaktung 5 zugeführt. Dort werden die Tabletts in ihrer Zuführbewegung in einen hochkant gestellten Zustand überführt und dann in eine entsprechende Tablettspur der Spülmaschine 3 eingestellt. Dieser Vorgang erfolgt vorzugsweise vollautomatisch.

Wie in FIG. 1 bis FIG. 3 gezeigt, wird das Zuführsystem 2 bzw. Zuführförderband stirnseitig am Zulaufbereich der Transportbandgeschirrspülmaschine 3 vorbeigeführt. Auf Höhe des Zulaufbereichs der Transportspülmaschine 3 befindet sich das halbautomatisierte Beladesystem 10, in welches beispielsweise die Teller und Schälchen von den zugeführten Gedecksätzen in dafür vorgesehene Eintaktspuren 14, 15 des Beladesystems 10 eingesetzt werden. Der Bediener steht hierbei stirnseitig an einer Beladeposition mit Blick in Richtung der Transportspülmaschine 3.

Abhängig von der benötigten Spülgutkapazität ist es hierbei auch denkbar, dass eine Transportspülmaschine 3 mit einem breiteren Haupttransportband 4 als in FIG. 1 bis FIG. 3 dargestellt zum Einsatz kommt, so dass eine oder mehrere weitere Eintaktspuren an dem Beladesystem 10 ergänzt werden können, welche entweder von der ersten Beladeposition von dem gleichen Bediener beladen werden können oder bei erhöhtem Kapazitätsbedarf separat von einem zweiten Bediener, welcher direkt daneben an einer weiteren Beladestation steht.

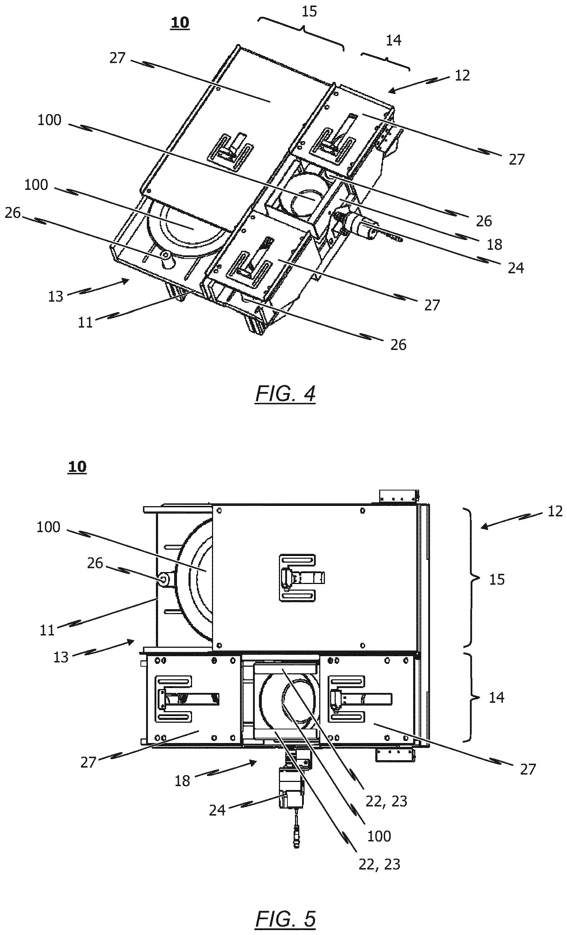

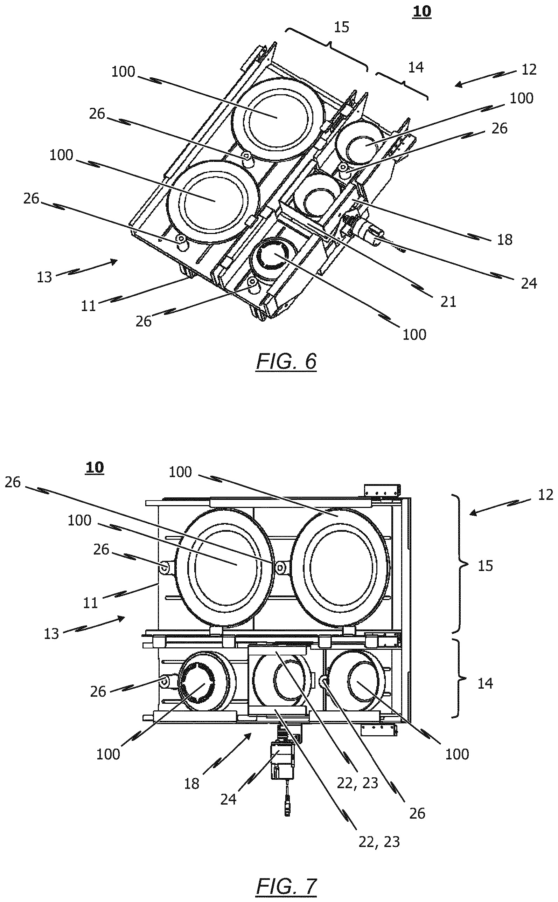

Wie in FIG. 2 bis FIG. 7 dargestellt, weist das bei der in FIG. 1 bis FIG. 3 gezeigten Anordnung 1 zum Einsatz kommende Beladesystem 10 eine insbesondere als Rutsche ausgeführte Transportbahn 11 auf, welche gegenüber der Horizontalen derart geneigt ist, dass ein in einem oberen, ersten Bereich 12 der Transportbahn 11 gestelltes Spülgutteil 100 vorzugsweise ausschließlich durch Schwerkraft zu einem oder in Richtung eines dem ersten Bereich 12 gegenüberliegenden insbesondere unteren zweiten Bereich 13 der Transportbahn 11 bewegbar ist.

Die Transportbahn 11 ist bei dem in FIG. 2 bis FIG. 7 gezeigten Beladesystem 10 in zwei parallel zueinander verlaufende Eintaktspuren 14, 15 eingeteilt, welche sich jeweils in der Längserstreckungsrichtung der Transportbahn 11 erstrecken. Dabei ist bei der in FIG. 2 bis FIG. 7 gezeigten Ausführungsform des erfindungsgemäßen Beladesystems 10 vorgesehen, dass der ersten Eintaktspur 14 Spülgut einer ersten Spülgutart und der zweiten Eintaktspur 15 Spülgut einer zweiten Spülgutart zugeordnet ist. Bei der ersten Spülgutart handelt es sich insbesondere um Schälchen, während es sich bei der zweiten Spülgutart um Teller oder Untertassen handelt.

Die erste Spülgutart, hier also die Schälchen, sind für eine effiziente Reinigung in der Transportspülmaschine 3 vorzugsweise um 180° zu drehen, damit diese in das Haupttransportband der Transportspülmaschine 3 ideal positioniert eingetaktet werden können.

Zu diesem Zweck ist bei der in FIG. 2 bis FIG. 7 gezeigten Ausführungsform des erfindungsgemäßen Beladesystems 10 vorgesehen, dass die erste Eintaktspur 14 in einen oberen, ersten Abschnitt 16 und in einen unteren, zweiten Abschnitt 17 unterteilt ist, wobei in einem Bereich zwischen dem ersten und zweiten Abschnitt 16, 17 der ersten Eintaktspur 14 eine den ersten Abschnitt 16 der Eintaktspur 14 mit dem zweiten Abschnitt 17 der ersten Eintaktspur 14 verbindende Wendevorrichtung angeordnet ist.

Bei der in FIG. 2 bis FIG. 7 gezeigten Ausführungsform des erfindungsgemäßen Beladesystems 10 ist ferner vorgesehen, dass jeder Eintaktspur 14, 15 der Transportbahn 11 Spülgut einer bestimmten Größe und/oder Abmessung oder Spülgut einer bestimmten Art zugeordnet ist.

Vorzugsweise ist den Eintaktspuren 14, 15 mindestens eine Abdeckung 27 zugeordnet ist, welche ausgebildet ist, zumindest teil- oder bereichsweise von oben die zugeordnete Eintaktspur 14, 15 abzudecken, so dass die Eintaktspur 14, 15 mit der Abdeckung 27 einen schachtartigen Kanal zum Aufnehmen von entsprechenden Spülgutteilen 100 ausbildet, wobei die Abdeckung 27 vorzugsweise von der zugeordneten Eintaktspur 14, 15 entfernbar ausgeführt ist.

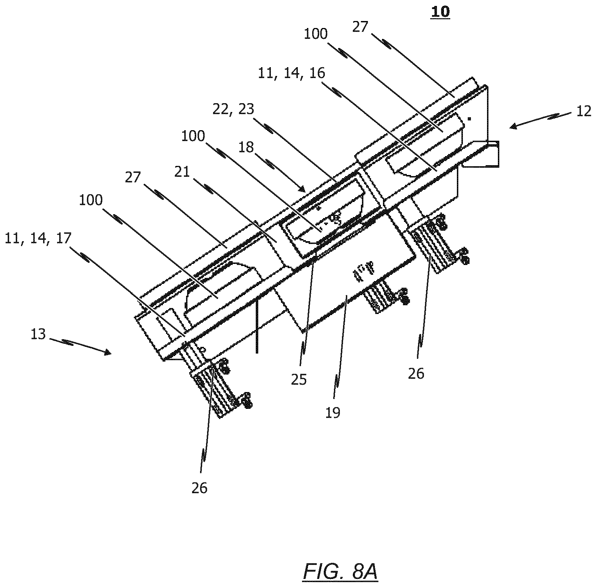

Wie es insbesondere der Darstellung in FIG. 8A bis FIG. 8C entnommen werden kann, ist die Wendevorrichtung ausgebildet, ein von der ersten Eintaktspur 14 aufgenommenes und in dem Bereich zwischen dem ersten und zweiten Abschnitt 16, 17 der ersten Eintaktspur 14 bewegtes Spülgutteil 100 um 180° zu drehen und anschließend das um 180° gedrehte Spülgutteil 100 dem zweiten Abschnitt 17 der ersten Eintaktspur 14 zu übergeben.

Dabei ist insbesondere vorgesehen, dass unterhalb des Bereichs zwischen dem ersten und zweiten Abschnitt 16, 17 der ersten Eintaktspur 14 ein Schmutzsammelbereich 19 vorgesehen ist, in welchem Schmutz aufnehmbar ist, welcher beim Drehen des Spülgutteils 100 durch Schwerkraft von dem Spülgutteil 100 abfällt.

Bei dem in den Zeichnungen gezeigten Beladesystem 10 ist die Wendevorrichtung als ein Wendefach 18 ausgeführt, insbesondere in Gestalt einer einseitig offenen und zumindest im Wesentlichen kastenförmigen Lade.

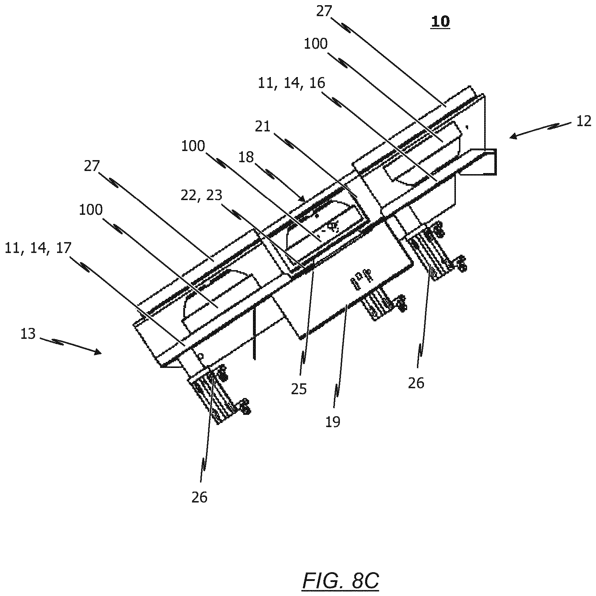

Das Wendefach 18 ist - wie in FIG. 8A bis FIG. 8C gezeigt - zwischen einer ersten Stellung, in welcher das von der ersten Eintaktspur 14 aufgenommene und in den Bereich zwischen dem ersten und zweiten Abschnitt 16, 17 der ersten Eintaktspur 14 bewegte Spülgutteil 100 zumindest teil- oder bereichsweise von dem Wendefach 18 aufgenommen ist (vgl. FIG. 8A), und einer zweiten Stellung überführbar, in welcher das Wendefach 18 mit dem von dem Wendefach 18 zumindest teil- oder bereichsweise aufgenommenen Spülgutteil 100 - im Vergleich zu der ersten Stellung des Wendefachs - um 180° gedreht vorliegt (vgl. FIG. 8C).

Der Darstellung in FIG. 8A ist zu entnehmen, dass das Wendefach 18 einen in der ersten Stellung des Wendefachs 18 unteren Bodenbereich 20 und einen in der ersten Stellung des Wendefachs 18 dem zweiten Abschnitt der ersten Eintaktspur 14 zugewandten stirnseitigen Wandbereich 21 aufweist. Dabei stößt das Spülgutteil 100 vorzugsweise gegen den stirnseitigen Wandbereich 21 des Wendefachs 18, wenn in der ersten Stellung des Wendefachs 18 (vgl. FIG. 8A) das Spülgutteil 100 zumindest teil- oder bereichsweise aufgenommen wird oder aufgenommen ist.

Ferner ist der Darstellung in FIG. 8A zu entnehmen, dass in der ersten Stellung des Wendefachs 18 die Oberfläche des Bodenbereichs 20, die Oberfläche des ersten Abschnitts 16 der ersten Eintaktspur 14 und die Oberfläche des zweiten Abschnitts 17 der ersten Eintaktspur 14 in einer gemeinsamen Ebene liegen.

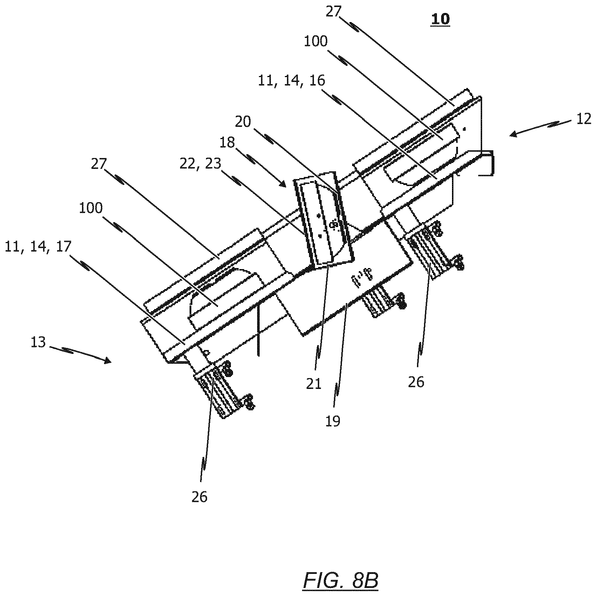

Einer Zusammenschau der FIG. 8A, FIG. 8B und FIG. 8C ist zu entnehmen, dass das Wendefach 18 des Beladesystems 10 um eine zumindest im Wesentlichen horizontal verlaufende Achse zwischen der ersten und zweiten Stellung relativ zu dem ersten und zweiten Abschnitt 16, 17 der ersten Eintaktspur 14 verschwenkbar gelagert ist.

Der Ansicht in FIG. 8C kann entnommen werden, dass das Wendefach 18 derart um die zumindest im Wesentlichen horizontal verlaufende Achse verschwenkbar gelagert ist, dass der stirnseitige Wandbereich 21 des Wendefachs 18 in der zweiten Stellung des Wendefachs 18 dem ersten Abschnitt 16 der ersten Eintaktspur 14 zugewandt ist.

Zu erkennen ist ferner, dass das Wendefach 18 eine Abstützung 22 aufweist, welche ausgebildet ist, zu verhindern, dass beim Überführen des Wendefachs 18 von der ersten Stellung (vgl. FIG. 8A) in die zweite Stellung (vgl. FIG. 8C) das zumindest teil- oder bereichsweise von dem Wendefach 18 aufgenommene Spülgutteil 100 aus dem Wendefach 18 herausfällt.

Obgleich es grundsätzlich denkbar ist, dass die Abstützung 22 als ein in das Wendefach 18 einfahrbarer Abstützkörper ausgeführt ist, ist bei der in den Zeichnungen gezeigten Ausführungsform des erfindungsgemäßen Beladesystems 10 vorgesehen, dass die Abstützung 22 durch eine Führung 23 realisiert wird.

Im Einzelnen weist das Wendefach 18 eine sich in der Längserstreckungsrichtung der Transportbahn 11 erstreckende und parallel zu dem Bodenbereich 20 des Wendefachs 18 verlaufende Führung 23, insbesondere in Gestalt einer Führungsleiste oder Führungsschiene, auf.

In diesem Zusammenhang ist es selbstverständlich aber auch denkbar, dass die mindestens eine Führung 23 als Hinterschneidung ausgeführt ist.

Wie es der Darstellung in FIG. 8C entnommen werden kann, liegen in der zweiten Stellung des Wendefachs 18 die Oberfläche der Führung 23, die Oberfläche des ersten Abschnitts 16 der ersten Eintaktspur 14 und die Oberfläche des zweiten Abschnitts 17 der ersten Eintaktspur 14 in einer gemeinsamen Ebene.

Der Ansicht in FIG. 8B hingegen ist zu entnehmen, dass die Führung 23 ebenfalls ausgebildet ist, zu verhindern, dass beim Überführen des Wendefachs 18 von der ersten Stellung (vgl. FIG. 8A) in die zweite Stellung (vgl. FIG. 8C) das zumindest teil- oder bereichsweise von dem Wendefach 18 aufgenommene Spülgutteil 100 aus dem Wendefach 18 herausfällt.

Wie in FIG. 2 bis FIG. 7 angedeutet, weist die Wendevorrichtung einen Aktuator 24 auf, welcher ausgebildet ist, bedarfsweise das Wendefach 18 von der ersten Stellung in die zweite Stellung (und umgekehrt) zu überführen. Bei dem Aktuator 24 handelt es sich insbesondere um einen elektrischen Aktuator 24, wobei allerdings auch elektromagnetisch, pneumatisch oder hydraulisch arbeitende Aktuatoren denkbar sind.

Obgleich in FIG. 2 bis FIG. 7 nicht explizit gezeigt, weist die Wendevorrichtung ferner eine Sensorik, beispielsweise in Gestalt eines Präsenzmelders oder in Gestalt eines Anwesenheitsschalters, auf, welche ausgebildet ist, einen Zustand zu erfassen, wenn ein Spülgutteil 100 zumindest teil- oder bereichsweise von dem Wendefach 18 aufgenommen ist. Dabei weist der Aktuator 24 des Beladesystems 10 bzw. der Aktuator 24 der Wendevorrichtung eine Steuereinrichtung auf, welche ausgebildet ist, beim Erfassen, dass ein Spülgutteil 100 zumindest teil- oder bereichsweise von dem Wendefach 18 aufgenommen ist, den Aktuator 24 derart anzusteuern, dass der Aktuator 24 das Wendefach 18 in die zweite Stellung überführt.

Insbesondere ist es in diesem Zusammenhang denkbar, dass das Wendefach 18 derart um eine zumindest im Wesentlichen horizontal verlaufende und sich vorzugsweise senkrecht zur Längserstreckungsrichtung der Transportbahn 11 erstreckende Achse verschwenkbar gelagert ist, dass sich das Wendefach 18 selbstständig oder selbsttätig von der ersten Stellung in Richtung der zweiten Stellung bewegt, wenn - ausgehend von der ersten Stellung des Wendefachs 18 - ein Spülgutteil 100 zumindest teil- oder bereichsweise von dem Wendefach 18 aufgenommen ist oder aufgenommen wird.

Dabei kann die bereits genannte Sensorik ausgebildet sein, zu erfassen, dass sich das Wendefach 18 von der ersten Stellung in die zweite Stellung bewegt, so dass diese Bewegung als sensorisch erfassbarer Trigger zum Aktivieren des Aktuators herangezogen werden kann.

Der Darstellung in FIG. 2 bis FIG. 7 ist ferner zu entnehmen, dass der beim Drehen des Spülgutteils 100 durch Schwerkraft von dem Spülgutteil 100 abfallende Schmutz über eine von einem Randbereich des Schmutzsammelbereichs 19 definierte Öffnung 25 dem Schmutzsammelbereich 19 zuführbar ist. Dabei ist bei der in FIG. 2 gezeigten Ausführungsvariante des erfindungsgemäßen Beladesystems 10 vorgesehen, dass der die Öffnung 25 des Schmutzsammelbereichs 19 definierende Randbereich des Schmutzsammelbereichs 19 in einer Ebene liegt, die beabstandet von und vorzugsweise parallel zu der Ebene verläuft, in welcher in der ersten Stellung des Wendefachs 18 (vgl. FIG. 8A) die Oberfläche des Bodenbereichs 20 des Wendefachs 18 liegt.

Wie in FIG. 2 angedeutet, ist der Schmutzsammelbereich 19 über einen Schmutzabfallschacht 28 mit einem bei einem Zulauf- oder Beladebereich einer dem Beladesystem 10 zugeordneten Transportspülmaschine 3 vorgesehenen Schmutzsammelbereich 29 verbunden, wobei der Schmutzabfallschacht 28 vorzugsweise derart ausgebildet ist, dass der in dem Schmutzsammelbereich 19 des Beladesystems 10 gesammelte Schmutz durch Schwerkraft über den Schmutzabfallschacht 28 in den Schmutzsammelbereich 29 bei dem Zulauf- oder Beladebereich der Transportspülmaschine 3 gelangt oder gelangen kann.

Das Beladesystem 10 gemäß der in den Zeichnungen gezeigten exemplarischen Ausführungsform weist ferner eine Einrichtung zur Taktung der Bewegung der in den Eintaktspuren 14, 15 aufgenommenen Spülgutteile 100 von dem ersten Bereich 12 der Transportbahn 11 zu dem zweiten Bereich 13 der Transportbahn 11 auf. Dabei sind die Eintaktspuren 14, 15 in mehrere Intervalle aufgeteilt, wobei die Taktungseinrichtung ausgebildet ist, einen Transfer eines Spülgutteils 100 von einem ersten Intervall zu einem benachbarten zweiten Intervall zu steuern.

Zur Aufteilung der Eintaktspur 14, 15 in die Intervalle weist die Taktungseinrichtung entsprechende jeweils das Ende eines jeden Intervalls festlegende Sperrelemente 26 auf, welche in die Eintaktspur 14, 15 ein- und ausfahrbar sind, um so den Transfer des Spülgutteils 100 von dem ersten Intervall zu dem zweiten Intervall zu sperren bzw. freizugeben.

Dabei ist die Taktungseinrichtung ausgebildet, die jeweiligen den Intervallen der Eintaktspur 14, 15 zugeordneten Sperrelemente 26 derart anzusteuern, dass die Sperrelemente 26 zeitgleich in die Eintaktspur 14, 15 ein- und ausgefahren werden, so dass der Transfer des Spülgutteils 100 von dem ersten Intervall zu dem zweiten Intervall nur dann freigegeben wird, wenn sich kein Spülgutteil 100 mehr in dem zweiten Intervall befindet, oder wenn sich ein Spülgutteil 100 von dem zweiten Intervall bereits in ein zum zweiten Intervall benachbartes drittes Intervall bewegt.

Zusammenfassend ist festzuhalten, dass es Ziel der Erfindung ist, die manuellen Handhabungsschritte weiter zu reduzieren, so dass beispielsweise Teller und Schälchen halb-automatisch in das Haupttransportband einsortiert werden können, um auf diese Weise:
- Manuelle Arbeitsschritte und damit Arbeitsaufwand für den Bediener zu reduzieren, da der Bewegungsablauf zum Beladen von Tellern und Schälchen für den Bediener optimiert wird durch:
   o Eliminierung 90° Drehung des Oberkörpers zwischen Tablettzuförder-band und Transportband Geschirrspülmaschine - die Teller und Schälchen müssen lediglich von Tablett angehoben und in frontseitige Beladungsöffnungen des Beladesystems 10 gestellt werden, d.h. viel kürzere und ergonomischere Bewegung;
   o Keine 180° Drehung der Schälchen zwischen Entnahme der Schälchen von Tablett und Beladung der Schälchen ins Transportband - die Drehung der Schälchen erfolgt innerhalb des Beladesystems 10;
   o Keine Einsortierung des Spülguts in dezidierte Transportbandfächer
      - die Eintaktung der Spülguts in das Transportband erfolgt durch das Beladesystem 10;
- Das Reinigungsergebnis der Transportspülmaschine 3 zu verbessern, da sämtliches Spülgut einheitlich auf dem Transportband orientiert ist und sortenrein innerhalb von dedizierten Spuren durch die Maschine fährt;
- Den Entladeprozess zu vereinfachen, da jede Spülgutsorte auf einer definierten Spur durch die Spülmaschine transportiert wird und somit bereits vorsortiert am Entladebereich der Spülmaschine ankommt.

Die Erfindung betrifft somit insbesondere folgende Aspekte:

### Aspekt 1:

Die Bandtransportgeschirrspülmaschine mit einer Beladeeinheit zur Eintaktung von mindestens einem Spülgutteil 100 in das Transportband der Bandtransportgeschirrspülmaschine ausgestattet ist, wobei die Beladeeinheit durch die Kombi-nation von einer Rutsche, angetriebenen Fördereinrichtung o.Ä. und einer Wendeeinheit sicherstellt, dass das Geschirrteil automatisch mit der spülgutspezifischen Ausrichtung in das Transportband eingetaktet wird

### Aspekt 2:

Maschine nach Aspekt 1, dadurch gekennzeichnet, dass das Spülgut vorzugsweise auf Grund der Neigung der Eintaktspuren mittels Schwerkraft in die nachfolgenden Eintaktpositionen und von dort dann schließlich in das Transportband der Spülmaschine rutscht. Alternativ kann der Transport in die nach-liegende Eintaktposition aber auch über einen zusätzlichen Antrieb wie z.B. Förderband, Riemen etc. erfolgen

### Aspekt 3:

Maschine nach Aspekt 1, dadurch gekennzeichnet, dass die Beladeeinheit je nach Spülguttyp zusätzlich über eine Wendeeinheit verfügt, um Spülgut wie z.B. Schälchen, welches für ein gutes Reinigungsergebnis mit der Öffnung 25 nach unten gereinigt werden muss, drehen zu können, so dass das Spülgut mit Öffnung 25 nach oben in die Beladeinheit eingestellt werden kann und dann mit Öffnung 25 nach unten von der Beladeeinheit in das Transportband Bandtransportspül-maschine eingetaktet werden kann. Eine alternative Ausführungsform sieht vor, dass die Wendeeinheit immer Bestandteil einer Eintaktspur 14 ist und die Wende-einheit dann aber nur bei Bedarf, d.h. je nach eingelegtem Spülguttyp, das Spülgut dann auch wirklich wendet, und bei Nichtbedarf einfach deaktiviert bleibt.

### Aspekt 4:

Maschine nach Aspekt 1 und 3, dadurch gekennzeichnet, dass die Wendeeinheit z.B. über einen elektrischen, pneumatischen, magnetischen, etc. Antrieb bewegt wird oder alternativ die Drehbewegung über Schwerkraft eingeleitet wird, z.B. mit Hilfe einer außermittig platzierten Drehachse, so dass die Drehbewegung direkt beim Reinrutschen des Spülguts in die Wendeeinheit durch die Schwerkraft eingeleitet wird.

### Aspekt 5:

Maschine nach Aspekt 1, dadurch gekennzeichnet, dass die einzelnen Eintaktspuren über ein oder mehrere Spülgutpositionen verfügen, so dass ein Einstellen von Spülgut in die obere Einstellposition nur möglich ist, wenn das zuvor eingestellte Spülgut aus der Einstellposition in die darunterliegende Position transferiert wurde.

### Aspekt 6:

Maschine nach Aspekt 1, dadurch gekennzeichnet, dass die Beladeeinheit so gestaltet ist, dass diese entweder manuell von einem Maschinenbediener bestückt werden kann oder alternativ automatisch z.B. durch einen vorgeschalteten Roboter, Greifarm o.Ä. welcher das Spülgut automatisch vom Tablett in die jeweiligen Einstellpositionen transferiert.

### Aspekt 7:

Maschine nach Aspekt 1 und 2, dadurch gekennzeichnet, dass unterhalb der Wendeeinrichtung eine Schmutzauffang-Vorrichtung ist, welche die während der Drehung durch die Schwerkraft herausfallenden Speisereste auffängt und gezielt in eine Siebschublade ableitet.

### Aspekt 8:

Maschine nach Aspekt 1, dadurch gekennzeichnet, dass die Beladevorrichtung über eine Abdeckung verfügt, welche die ein oder mehrere Eintaktspuren abdeckt, wobei die Abdeckung so gestaltet ist, dass sich oberhalb der Einstell-öffnungen eine horizontale Fläche ergibt, welche als Abstellplatz / Pufferbereich für Spülgut verwendet werden kann, welches entweder auf Grund von Form oder Größe generell nicht in eine der Öffnungen eingestellt werden kann oder welches zwar theoretisch eingestellt werden kann, aber in dem Moment der Entnahme vom Tablett nicht direkt eingestellt werden kann, da die Einstellposition in dem Moment gerade noch durch das zuvor eingestellte Spülgutteil 100 belegt ist.

### Aspekt 9:

Maschine nach Aspekt 1, dadurch gekennzeichnet, dass die Beladeöffnungen mit einem optischen Signal ausgestattet sind (z.B. rote und grüne Beleuchtung), um dem Bedienpersonal den aktuellen Beladungszustand der Einstellöffnungen zu visualisieren (z.B. rot = Einstellposition belegt, grün = Einstellposition frei)

### Aspekt 10:

Maschine nach Aspekt 1, dadurch das die Beladeeinheit optional mit weiteren Eintaktspuren für weitere Spülguttypen wie z.B. Gläser und/oder Besteck ausgestattet werden kann, um auch dieses Spülgut nach dem gleichen Prinzip in das Transportband der Bandspülmaschine einzutakten.

Die Erfindung ist nicht auf die in den Zeichnungen gezeigten Ausführungsformen beschränkt, sondern ergibt sich aus einer Zusammenschau sämtlicher hierin offenbarter Merkmale.

### Bezugszeichenliste

- 1: Anordnung
- 2: Zuführsystem
- 3: Transportspülmaschine
- 4: Transportvorrichtung/Haupttransportband der Transportspülmaschine
- 5: Tabletteinstapelung
- 10: Beladesystem
- 11: Transportbahn
- 12: erster Bereich der Transportbahn
- 13: zweiter Bereich der Transportbahn
- 14: erste Eintaktspur
- 15: zweite Eintaktspur
- 16: erster Abschnitt der ersten Eintaktspur
- 17: zweiter Abschnitt der ersten Eintaktspur
- 18: Wendevorrichtung/Wendefach
- 19: Schmutzsammelbereich
- 20: Bodenbereich des Wendefachs
- 21: stirnseitiger Wandbereich des Wendefachs
- 22: Abstützung
- 23: Führung
- 24: Aktuator
- 25: Öffnung des Schmutzsammelbereichs
- 26: Sperrelement
- 27: Abdeckung
- 28: Schmutzabfallschacht
- 29: Schmutzsammelbereich
- 100: Spülgutteil

## Patentansprüche

1. Beladesystem (10) zum Beladen einer Transportspülmaschine (3) mit Spülgutteilen (100), wobei das Beladesystem (10) Folgendes aufweist:
- eine insbesondere als Rutsche ausgeführte Transportbahn (11), welche gegenüber der Horizontalen insbesondere derart geneigt oder neigbar ist, dass ein in einem insbesondere oberen, ersten Bereich (12) der Transportbahn (11) gestelltes Spülgutteil (100), vorzugsweise ausschließlich durch Schwerkraft, zu einem oder in Richtung eines dem ersten Bereich (12) gegenüberliegenden, insbesondere unteren, zweiten Bereich (13) der Transportbahn (11) bewegbar ist,
wobei die Transportbahn (11) mindestens eine sich in der Längserstreckungsrichtung der Transportbahn (11) erstreckende Eintaktspur (14, 15) aufweist, wobei die mindestens eine Eintaktspur (14, 15) in einen insbesondere oberen, ersten Abschnitt (16) und in einen insbesondere unteren, zweiten Abschnitt (17) unterteilt ist, wobei in einem Bereich zwischen dem ersten und zweiten Abschnitt (16, 17) der Eintaktspur (14, 15) eine den ersten Abschnitt (16) der Eintaktspur (14, 15) mit dem zweiten Abschnitt (17) der Eintaktspur (14, 15) verbindende Wendevorrichtung angeordnet ist, welche ausgebildet ist, bedarfsweise ein von der Eintaktspur (14, 15) aufgenommenes und in dem Bereich zwischen dem ersten und zweiten Abschnitt (16, 17) der Eintaktspur (14, 15) bewegtes Spülgutteil (100) um 180° zu drehen und anschließend das um 180° gedrehte Spülgutteil (100) dem zweiten Abschnitt (17) der Eintaktspur (14, 15) zu übergeben, wobei unterhalb des Bereichs zwischen dem ersten und zweiten Abschnitt (16, 17) der Eintaktspur (14, 15) ein Schmutzsammelbereich (19) vorgesehen ist, von welchem Schmutz aufnehmbar ist, welcher beim Drehen des Spülgutteils (100) durch Schwerkraft von dem Spülgutteil (100) abfällt.

2. Beladesystem (10) nach Anspruch 1,
wobei die Wendevorrichtung ein Wendefach (18), insbesondere in Gestalt einer einseitig offenen und zumindest im Wesentlichen kastenförmigen Lade, aufweist, welches zwischen einer ersten Stellung, in welcher das von der Eintaktspur (14, 15) aufgenommene und in dem Bereich zwischen dem ersten und zweiten Abschnitt (16, 17) der Eintaktspur (14, 15) bewegte Spülgutteil (100) zumindest teil- oder bereichsweise von dem Wendefach (18) aufgenommen ist, und einer zweiten Stellung überführbar ist, in welcher das Wendefach (18) mit dem von dem Wendefach (18) zumindest teil- oder bereichsweise aufgenommenen Spülgutteil (100) - im Vergleich zu der ersten Stellung des Wendefachs (18) - um 180° gedreht vorliegt.

3. Beladesystem (10) nach Anspruch 2,
wobei das insbesondere in Gestalt einer einseitig offenen und zumindest im Wesentlichen kastenförmigen Lade ausgeführte Wendefach (18) um eine zumindest im Wesentlichen horizontal verlaufende Achse verschwenkbar zwischen der ersten und zweiten Stellung relativ zu dem ersten und zweiten Abschnitt der Eintaktspur (14, 15) gelagert ist; und/oder
wobei das insbesondere in Gestalt einer einseitig offenen und zumindest im Wesentlichen kastenförmigen Lade ausgeführte Wendefach (18) einen - in der ersten Stellung des Wendefachs (18) - unteren Bodenbereich (20) und einen - in der ersten Stellung des Wendefachs (18) - dem zweiten Abschnitt (17) der Eintaktspur (14, 15) zugewandten stirnseitigen Bereich, insbesondere Wandbereich (21), aufweist, wobei vorzugsweise das Spülgutteil (100) gegen den stirnseitigen Bereich, insbesondere Wandbereich (21), des Wendefachs (18) anstößt, wenn in der ersten Stellung des Wendefachs (18) das Spülgutteil (100) zumindest teil- oder bereichsweise aufgenommen wird oder aufgenommen ist.

4. Beladesystem (10) nach Anspruch 3,
wobei das Wendefach (18) derart um die zumindest im Wesentlichen horizontal verlaufende Achse verschwenkbar gelagert ist, dass der stirnseitige Bereich, insbesondere Wandbereich (21), des Wendefachs (18) in der zweiten Stellung des Wendefachs (18) dem ersten Abschnitt (16) der Eintaktspur (14, 15) zugewandt ist; und/oder
wobei in der ersten Stellung des Wendefachs (18) die Oberfläche des Bodenbereichs (20), die Oberfläche des ersten Abschnitts (16) der Eintaktspur (14, 15) und die Oberfläche des zweiten Abschnitts (17) der Eintaktspur (14, 15) in einer gemeinsamen Ebene liegen.

5. Beladesystem (10) nach einem der Ansprüche 2 bis 4,
wobei das insbesondere in Gestalt einer einseitig offenen und zumindest im Wesentlichen kastenförmigen Lade ausgeführte Wendefach (18) mindestens eine Abstützung (22) aufweist, welche ausgebildet ist, zu verhindern, dass beim Überführen des Wendefachs (18) von der ersten Stellung in die zweite Stellung das zumindest teil- oder bereichsweise von dem Wendefach (18) aufgenommene Spülgutteil (100) aus dem Wendefach (18) herausfällt, wobei die mindestens eine Abstützung (22) vorzugsweise einen bedarfsweise insbesondere seitlich in das Wendefach (18) einfahrbaren Abstützkörper aufweist; und/oder
wobei das insbesondere in Gestalt einer einseitig offenen und zumindest im Wesentlichen kastenförmigen Lade ausgeführte Wendefach (18) mindestens eine insbesondere als Hinterschneidung ausgeführte, sich in der Längserstreckungsrichtung der Transportbahn (11) erstreckende und parallel zu dem Bodenbereich (20) des Wendefachs (18) verlaufende Führung (23), insbesondere in Gestalt einer Führungsleiste oder Führungsschiene, aufweist, wobei in der zweiten Stellung des Wendefachs (18) die Oberfläche der Führung (23), die Oberfläche des ersten Abschnitts (16) der Eintaktspur (14, 15) und die Oberfläche des zweiten Abschnitts (17) der Eintaktspur (14, 15) in einer gemeinsamen Ebene liegen, wobei die mindestens eine Führung (23) vorzugsweise ausgebildet ist, zu verhindern, dass beim Überführen des Wendefachs (18) von der ersten Stellung in die zweite Stellung das zumindest teil- oder bereichsweise von dem Wendefach (18) aufgenommene Spülgutteil (100) aus dem Wendefach (18) herausfällt; und/oder
wobei die Wendevorrichtung einen insbesondere elektrisch, elektromagnetisch, pneumatisch oder hydraulisch arbeitenden Aktuator (24) aufweist, welcher ausgebildet ist, bedarfsweise das Wendefach (18) von der ersten Stellung in die zweite Stellung und umgekehrt zu überführen.

6. Beladesystem (10) nach Anspruch 5,
wobei die Wendevorrichtung eine Sensorik, insbesondere in Gestalt eines Präsenzmelders oder Anwesenheitsschalters, aufweist, welche ausgebildet ist, einen Zustand zu erfassen, wenn ein Spülgutteil (100) zumindest teil- oder bereichsweise von dem Wendefach (18) aufgenommen ist, und wobei dem Aktuator (24) eine Steuereinrichtung zugeordnet ist, welche ausgebildet ist, beim Erfassen, dass ein Spülgutteil (100) zumindest teil- oder bereichsweise von dem Wendefach (18) aufgenommen ist, den Aktuator (24) derart anzusteuern, dass der Aktuator (24) das Wendefach (18) in die zweite Stellung überführt; und/oder
wobei das Wendefach (18) derart um eine zumindest im Wesentlichen horizontal verlaufende und sich vorzugsweise senkrecht zur Längserstreckungsrichtung der Transportbahn (11) erstreckende Achse verschwenkbar gelagert ist, dass sich das Wendefach (18) selbstständig oder selbsttätig von der ersten Stellung in Richtung der zweiten Stellung bewegt, wenn - in der ersten Stellung des Wendefachs (18) - ein Spülgutteil (100) zumindest teil- oder bereichsweise von dem Wendefach (18) aufgenommen ist oder aufgenommen wird.

7. Beladesystem (10) nach Anspruch 6,
wobei die Sensorik ausgebildet ist, zu erfassen, dass sich das Wendefach (18) von der ersten Stellung in Richtung der zweiten Stellung bewegt, insbesondere wenn - in der ersten Stellung des Wendefachs (18) - ein Spülgutteil (100) zumindest teil- oder bereichsweise von dem Wendefach (18) aufgenommen ist oder aufgenommen wird.

8. Beladesystem (10) nach einem der Ansprüche 2 bis 7,
wobei der beim Drehen des Spülgutteils (100) durch Schwerkraft von dem Spülgutteil (100) abfallende Schmutz über eine von einem Randbereich des Schmutzsammelbereichs (19) definierte Öffnung (25) dem Schmutzsammelbereich (19) zuführbar ist oder zugeführt wird, wobei der die Öffnung (25) des Schmutzsammelbereichs (19) definierende Randbereich des Schmutzsammelbereichs (19) in einer Ebene liegt, die beabstandet von und vorzugsweise parallel zu der Ebene verläuft, in welcher in der ersten Stellung des Wendefachs (18) die Oberfläche des Bodenbereichs (20) des Wendefachs (18) liegt.

9. Beladesystem (10) nach einem der Ansprüche 1 bis 8,
wobei die Wendevorrichtung bedarfsweise aktivierbar ist, wobei in einem nicht-aktivierten Zustand der Wendevorrichtung das von der Eintaktspur (14, 15) aufgenommene und in den Bereich zwischen dem ersten und zweiten Abschnitt (16, 17) der Eintaktspur (14, 15) bewegte Spülgutteil (100) ohne eine 180°-Drehung des Spülgutteils (100) dem zweiten Abschnitt (17) der Eintaktspur (14, 15) übergeben wird.

10. Beladesystem (10) nach einem der Ansprüche 1 bis 9,
wobei die Transportbahn (11) zumindest teil- oder bereichsweise als Rollenbahn mit einer Vielzahl von sich senkrecht zu der Längserstreckungsrichtung der Transportbahn (11) erstreckenden und insbesondere drehbar gelagerten Rollen ausgeführt ist; oder
wobei die Transportbahn (11) eine Fördereinrichtung aufweist, mit welcher das in den ersten Bereich der Transportbahn (11) gestellte Spülgutteil (100) zu dem oder in Richtung des zweiten Bereichs der Transportbahn (11) bewegbar ist.

11. Beladesystem (10) nach einem der Ansprüche 1 bis 10,
wobei die Transportbahn (11) in mehrere parallel zueinander verlaufende Eintaktspuren (14, 15) aufgeteilt ist, wobei nicht jede Eintaktspur (14, 15) mit einer Wendevorrichtung versehen ist; und/oder wobei der mindestens einen Eintaktspur (14, 15) mindestens eine
Abdeckung (27) zugeordnet ist, welche ausgebildet ist, zumindest teil- oder bereichsweise von oben die zugeordnete Eintaktspur (14, 15) abzudecken, so dass die Eintaktspur (14, 15) mit der Abdeckung einen schachtartigen Kanal zum Aufnehmen von entsprechenden Spülgutteilen ausbildet, wobei die Abdeckung (27) vorzugsweise von der zugeordneten Eintaktspur (14, 15) entfernbar ausgeführt ist.

12. Beladesystem (10) nach einem der Ansprüche 1 bis 11,
wobei das Beladesystem (10) eine Einrichtung zur Taktung der Bewegung der in einer Eintaktspur (14, 15) aufgenommenen Spülgutteile (100) von dem ersten Bereich der Transportbahn (11) zu dem zweiten Bereich der Transportbahn (11) aufweist, wobei die Eintaktspur (14, 15) in mehrere Intervalle aufgeteilt ist, und wobei die Taktungseinrichtung ausgebildet ist, einen Transfer eines Spülgutteils (100) von einem ersten Intervall zu einem benachbarten zweiten Spülgutteil (100) zu steuern.

13. Beladesystem (10) nach Anspruch 12,
wobei zur Aufteilung der Eintaktspur (14, 15) in die Intervalle die Taktungseinrichtung entsprechende jeweils das Ende eines jeden Intervalls festlegende Sperrelemente (26) aufweist, welche in die Eintaktspur (14, 15) ein- und ausfahrbar sind zum Sperren bzw. Freigeben des Transfers des Spülgutteils (100) von dem ersten Intervall zu dem benachbarten zweiten Intervall; und/oder
wobei die Taktungseinrichtung ausgebildet ist, die jeweiligen den Intervallen der Eintaktspur (14, 15) zugeordneten Sperrelemente (26) derart anzusteuern, dass die Sperrelemente (26) zeitgleich in die Eintaktspur (14, 15) ein- oder ausgefahren werden, so dass der Transfer des Spülgutteils (100) von dem ersten Intervall zu dem zweiten Intervall nur dann freigegeben wird, wenn sich kein Spülgutteil (100) mehr in dem zweiten Intervall befindet oder sich von dem zweiten Intervall in ein zum zweiten Intervall benachbartes drittes Intervall bewegt.

14. Beladesystem (10) nach einem der Ansprüche 1 bis 13,
wobei der Schmutzsammelbereich (19) über einen Schmutzabfallschacht (28) mit einem bei einem Zulauf- oder Beladebereich einer dem Beladesystem (10) zugeordneten Transportspülmaschine (3) vorgesehenen Schmutzsammelbereich (29) verbunden ist, wobei der Schmutzabfallschacht (28) vorzugsweise derart ausgebildet ist, dass der in dem Schmutzsammelbereich (19) des Beladesystems (10) gesammelte Schmutz durch Schwerkraft über den Schmutzabfallschacht (28) in den Schmutzsammelbereich (29) bei dem Zulauf- oder Beladebereich der Transportspülmaschine (3) gelangt oder gelangen kann.

15. Anordnung (1) zum zumindest teil-automatisierten Reinigen von Spülgutteilen (100), wobei die Anordnung (1) Folgendes aufweist:
- ein Zuführsystem (2), insbesondere in Gestalt eines Zuführförderbands, zum Zuführen der zu reinigenden Spülgutteile (100);
- eine Transportspülmaschine (3) mit mindestens einer Transportvorrichtung (4), insbesondere in Gestalt eines Transportbands, zum Zuführen der zu reinigenden Spülgutteile (100) zu mindestens einer Behandlungszone der Transportspülmaschine (3); und
- ein Beladesystem (10) nach einem der Ansprüche 1 bis 14,
wobei vorzugsweise zumindest in dem Bereich zwischen dem Zuführsystem (2) und dem Beladesystem (10) von dem Zuführsystem (2) die zu reinigenden Spülgutteile (100) im Wesentlichen senkrecht zu der Erstreckungsrichtung der Transportbahn (11) des Beladesystems (10) zugeführt werden, und wobei vorzugsweise die Erstreckungsrichtung der Transportbahn (11) des Beladesystems (10) zumindest in einem Beladebereich der Transportspülmaschine (3) mit der Erstreckungsrichtung der Transportvorrichtung (4) der Transportspülmaschine (3) zumindest im Wesentlichen übereinstimmt.
